# EUROPEAN PATENT APPLICATION

(11) **EP 2 112 439 A1**
(43) Date of publication of application: **28.10.2009**
(21) Application number: 08154969.3
(22) Date of filing: 22.04.2008
(51) Int. Cl.: F24H 1/20

(54) **Hot water generation plant**

(71) Applicant: Montini, Renato, 37010 Costermano (VR) (IT)
(72) Inventor: Montini, Renato, 37010 Costermano (VR) (IT)
(74) Representative: Modiano, Micaela Nadia

(57) **Abstract**

A hot water generation plant (1), comprising a frame (2) which supports a boiler body (3) which is associated with a tank (4) for containing the water to be heated, the boiler body (3) being provided with a furnace (3a) which defines internally a combustion chamber (5) which is connected functionally to a burner (6) and is connected to an exhaust gas discharge duct (7) which is at least partially immersed in the water containment tank (4), the exhaust gas discharge duct (7) leads into a distribution manifold (8), which is connected to an exchanger (9) which comprises at least two exchanger tubes (9a) which in turn lead into a discharge manifold (10) which is connected to a discharge duct (11).

## Description

The present invention relates to a hot water generation plant.

Hot water generation plants are currently widespread which are constituted substantially by a boiler, capable of providing hot water for heating the rooms and optionally combined with exchangers for generating hot water for sanitary use.

An example of plants of this type is constituted by so-called combination boilers. In such boilers, switching from one function to the other is normally achieved by using a three-way valve which shunts the water of the primary circuit between the heating circuit and the sanitary water generation circuit.

In particular, these boilers have a burner which heats the water which passes through a primary exchanger, propelled by a circulation pump. As mentioned, shunt means, such as a three-way valve, shunt on command the circulation between an external heating circuit and a circuit for generating sanitary water.

The increasingly felt requirements in the field of energy saving and some requirements observed in particular types of dwelling have led to the development of other types of hot water generation plants, which substantially are composed of a tank for accumulating the water to be heated to heat the radiators and/or the floor heating system; the water inside the accumulation tank is generally heated by fire tubes connected to the combustion chamber of a burner.

Such devices can use condensation boilers, which achieve higher efficiencies than traditional boilers since they allow to utilize not only, as usual, the sensible heat of the exhaust gases generated during the combustion process, but also their latent heat.

Typically, condensation boilers are constituted by a furnace which defines internally a combustion chamber, inside which the fuel is burnt, and by a heat exchanger, which is connected to the combustion chamber and is usually constituted by a set of ducts for the passage of the hot exhaust gases generated during combustion.

The ducts for the passage of hot exhaust gases are immersed in the water to be heated, so as to allow the exhaust gases to transfer their heat to the water to be heated.

The great attention currently dedicated to problems related to energy saving has led to the insertion, within the tank for accumulating the water to be heated, of a heating coil which is connected to a solar power circuit.

Such heating coils are arranged at a lower portion of the accumulation tank so as to utilize the greater thermal difference between the fluid contained in them and the water in which they are immersed. As is known, colder water, by stratification, indeed arranges itself at the lower portion of the accumulation tank.

One problem which is rather felt in the hot water generation plants described above consists in the need, if one wishes to be able to utilize a substantial amount of accumulation water (on the order of 400-600 liters or more), to use a large quantity of passage ducts for the hot exhaust gases, with corresponding difficulties in providing the plant to allow correct connection to the combustion chamber.

Moreover, if the accumulation tank is associated with one or more heating coils connected to a solar power circuit, it is evident that if, as usual, one wishes to use a number of solar panels which allow to heat most of the water contained in the accumulation tank, the heating coils, which generally are wound in a spiral around a vertically arranged axis, are at a height of the accumulation tank in which the temperature of the water is already high, consequently reducing the efficiency of the heat exchange.

The aim of the present invention is to provide a hot water generation plant which is capable of eliminating or at least reducing drastically the drawbacks observed in currently commercially available plants.

Within this aim, an object of the present invention is to provide a hot water generation plant which allows to heat the water of the heating circuit quickly and with particularly high energy efficiencies.

Another object of the invention is to devise a hot water generation plant which has an extremely competitive cost, so that its use is advantageous also from an economical standpoint.

This aim and these and other objects, which will become better apparent hereinafter, are achieved by a hot water generation plant comprising a frame which supports a boiler body which is associated with a tank for containing the water to be heated, said boiler body being provided with a furnace which defines internally a combustion chamber which is connected functionally to a burner and is connected to an exhaust gas discharge duct which is at least partially immersed in said water containment tank, **characterized in that** said exhaust gas discharge duct leads into a distribution manifold connected to an exchanger which comprises at least two exchanger tubes which in turn exit into a discharge manifold which is connected to a discharge duct.

Further characteristics and advantages of the invention will become better apparent from the description of some preferred but not exclusive embodiments of a hot water generation plant according to the present invention, illustrated by way of non-limiting example in the accompanying drawings, wherein:
Figure 1 is a partially cutout front elevation view of a hot water generation plant;
Figure 2 is a top plan view of an exchanger;
Figure 3 is a partially cutout front elevation view of another embodiment of a hot water generation plant according to the present invention;
Figure 4 is a partial side elevation view of the exchange coil;
Figure 5 is a transverse sectional view of the exchanger tube, taken along the plane of arrangement traced by the line V-V of Figure 2.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the Figures, a hot water generation plant, generally designated by the reference numeral 1, comprises a frame 2 which supports a boiler body 3.

In particular, the boiler body 3 is associated with a tank 4 for containing the water to be heated and is provided with a furnace 3a which defines internally a combustion chamber 5 which is functionally connected to a burner 6.

The combustion chamber 5 is connected to an exhaust gas discharge duct 7 which is at least partially immersed in the tank 4 for containing the water to be heated.

According to the present invention, the exhaust gas discharge duct 7 leads into a distribution manifold 8, which is connected to an exchanger 9.

In particular, the exchanger 9 comprises at least two exchanger tubes 9a which in turn lead into a discharge manifold 10 connected to a condensation discharge duct 11, which leads externally with respect to the containment tank 4.

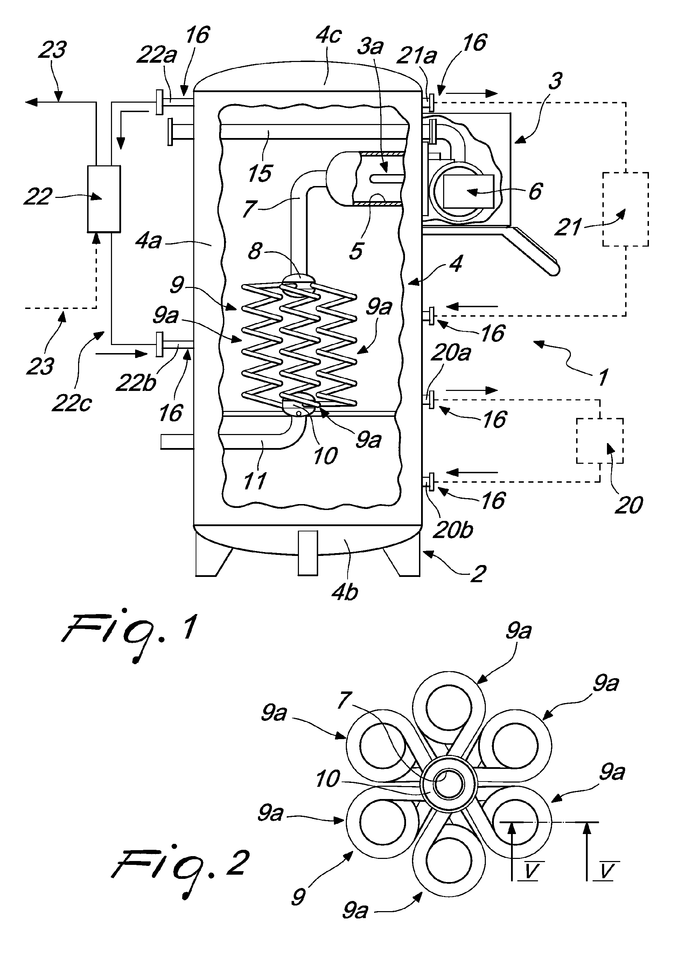

With reference to the preferred embodiment shown in Figures 1 and 2, the exchanger 9 can be constituted by two or more exchanger tubes 9a which are coiled in a spiral around a respective longitudinal axis.

In greater detail, the containment tank 4 has a side wall 4a whose longitudinal axis is arranged, during use, along a substantially vertical direction.

The side wall 4a is closed in a downward region by a supporting footing 4b and, in an upward region, by an upper closure dome 4c.

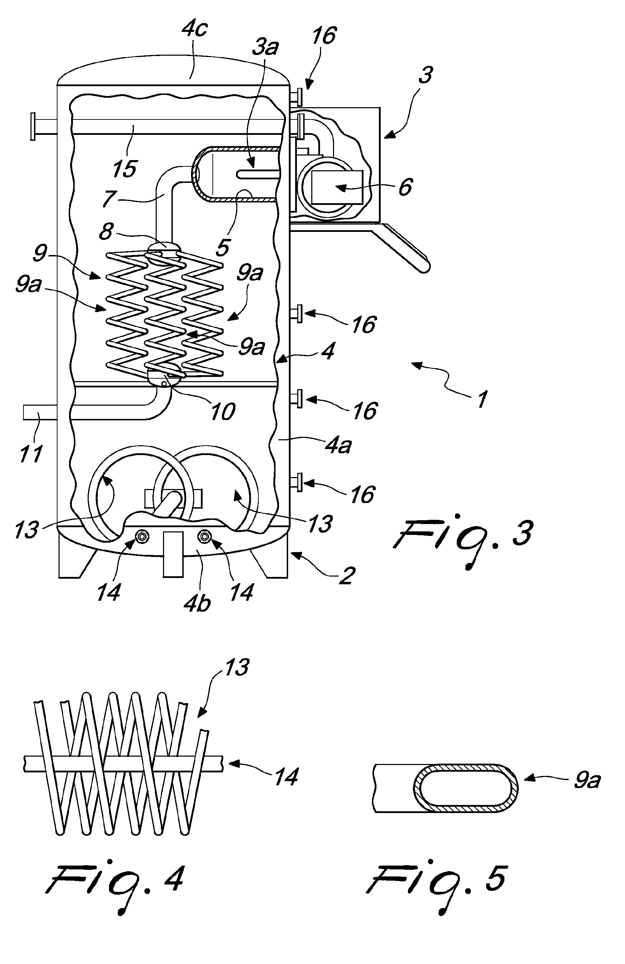

In order to facilitate heat exchange between the exhaust gases produced during combustion and the water contained inside the containment tank 4, it is convenient, as shown clearly in the cutout views of Figures 1 and 3, for the combustion chamber 5 to be at least partially arranged within the containment tank 4.

In this regard, it is advantageous to arrange the combustion chamber 5 at a higher level than the exchanger 9.

If, as described earlier, the containment tank 4 is arranged vertically, it is convenient that the longitudinal axes of extension of the exchanger tubes be also substantially parallel to the vertical direction of extension of the containment tank 4.

As shown clearly in the top plan view shown in Figure 2, the exchanger 9 comprises a plurality (six in the embodiment shown) of exchanger tubes 9a which are coiled in a spiral around the respective longitudinal axis and are arranged with an angular spacing, with respect to each other, about the main longitudinal axis of the containment tank 4 for the water to be heated.

Conveniently, the combustion chamber 5 instead has a substantially horizontal longitudinal axis.

According to a preferred embodiment (as shown in the sectional view of Figure 5), the exchanger tubes 9a have a flattened transverse cross-section in order to increase significantly, for an equal linear extension, the heat exchange surface so as to increase the efficiency of the plant.

With reference to the constructive variation shown in Figures 3 to 5, below the exchanger 9 at least one heating coil 13 is provided, which can be crossed by a heating fluid which is connected to an auxiliary heating circuit 14 with solar panels.

According to a particularly important aspect of the invention, the heating coil or coils 13 wind around a substantially horizontal winding axis.

In order to further increase the heat exchange between the heating fluid that passes through the heating coil or coils 13 and the water contained in the containment tank 4, there are as shown, two heating coils 13 which are mutually connected and partially intersect each other at a central portion of the water containment tank 4.

The heating coil or coils 13 also have a flattened transverse cross-section so as to further increase the heat exchange surface.

In order to increase the efficiency of the burner 6, the duct 15 for supplying air, or more generally the combustion gas, may cross internally, for example along a diametrical direction, the containment tank 4. In this manner, the combustion gas is fed to the burner 6 at a temperature which is higher than ambient temperature, with the result of allowing better and more efficient combustion.

As is known, on the side wall of the containment tank 4 connection ports 16 are provided which are designed to connect the water contained inside the containment tank 4 to the different user systems (floor heating 20, classic radiator heating 21, exchanger 22 for heating the water of the sanitary water system 23).

In this regard, it can be noted that at the lower portion of the side wall 4a of the containment tank 4 there are two connection ports 16, which provide, in particular, respectively a delivery port 20a and a return port 20b for the circuit of the water intended to heat the floor system.

Likewise, at the upper portion of the side wall 4a of the containment tank 4 there can be two other connection ports 16, which provide, in this case, respectively an outlet port 21a and an inlet port 21 b of the circuit of the water intended for the traditional heating system 21, for example with radiators.

Moreover, again at the upper portion of the side wall 4a of the containment tank 4, there are also two other connection ports 16, which provide a feed port 22a and an intake port 22b of the heating circuit 22c of the sanitary water system 23.

In particular, the heating circuit 22c has a pump in order to force the passage of the hot water drawn from the containment tank 4 through a heat exchanger 22 (typically of the plate type) in order to heat, generally in countercurrent, the water drawn from the water mains and intended for the sanitary water system 23.

The use of a hot water generation plant according to the present invention is evident from what has been described above.

In particular, the exhaust gases, produced by combustion, flow from the combustion chamber toward the exhaust gas discharge duct 7 and from there, through the distribution manifold 8, into the exchanger 9.

The crossing of the spirally coiled exchanger tubes 9a allows to transfer the heat of the exhaust gases to an extremely large amount of water, thus ensuring obviously optimum efficiency and performance.

The fact that the exchanger tubes 9a are coiled spirally allows, on the one hand, to use a longer linear extension of the tube for an equal distance between the distribution manifold 8 and the discharge manifold 10 and moreover allows a larger transverse heat exchange surface which facilitates the transfer of heat and the stratification of the water as a function of its temperature.

All the characteristics of the invention, if indicated above as advantageous, convenient or the like, may also be omitted or be replaced with equivalents.

The invention thus conceived is susceptible of numerous modifications and variations, all of which are within the scope of the appended claims.

In practice it has been found that the invention has achieved its intended aim and objects in all of its embodiments.

The contingent shapes and dimensions may be any according to requirements.

All the details may further be replaced with other technically equivalent elements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A hot water generation plant, comprising a frame which supports a boiler body which is associated with a tank for containing the water to be heated, said boiler body being provided with a furnace which defines internally a combustion chamber which is connected functionally to a burner and is connected to an exhaust gas discharge duct which is at least partially immersed in said water containment tank, **characterized in that** said exhaust gas discharge duct leads into a distribution manifold connected to an exchanger which comprises at least two exchanger tubes which in turn exit into a discharge manifold which is connected to a discharge duct.

2. The plant according to claim 1, **characterized in that** said exchanger comprises at least two exchanger tubes which are coiled spirally around a respective longitudinal axis.

3. The plant according to one or more of the preceding claims, **characterized in that** said combustion chamber is arranged at least partially within said water containment tank.

4. The plant according to one or more of the preceding claims, **characterized in that** said combustion chamber is arranged at a higher level than said exchanger, the longitudinal axes of extension of said exchanger tubes being substantially parallel to a vertical direction of extension of said containment tank.

5. The plant according to one or more of the preceding claims, **characterized in that** said exchanger comprises a plurality of exchanger tubes which are wound spirally around a respective longitudinal axis of extension and are angularly spaced about a main axis of extension of said water containment tank.

6. The plant according to one or more of the preceding claims, **characterized in that** said combustion chamber has a substantially horizontal axis of extension.

7. The plant according to one or more of the preceding claims,
**characterized in that** said exchanger tubes have a flattened transverse cross-section.

8. The plant according to one or more of the preceding claims, **characterized in that** said water containment tank accommodates, below said exchanger, at least one heating coil which can be crossed by a heating fluid and is connected to an auxiliary heating circuit which uses solar panels, said coil winding around a substantially horizontal winding axis.

9. The plant according to one or more of the preceding claims, **characterized in that** it comprises at least two heating coils which are mutually connected and partially intersect each other at a central portion of said water containment tank.

10. The plant according to one or more of the preceding claims, **characterized in that** said at least one heating coil has a flattened transverse cross-section.

11. The plant according to one or more of the preceding claims, **characterized in that** on the side wall of said containment tank there are connection ports which are designed to connect the water contained inside said containment tank to at least two plants designed to use said water.
